# EUROPÄISCHE PATENTSCHRIFT

(11) **EP 2 281 397 B1**
(45) Veröffentlichungstag und Bekanntmachung des Hinweises auf die Patenterteilung: **27.05.2020**
(21) Anmeldenummer: 09757276.2
(22) Anmeldetag: 03.06.2009
(51) Int. Cl.: H04N 9/12, H04N 5/74

(54) **BELEUCHTUNGS- UND ANZEIGEVORRICHTUNG**
ILLUMINATION AND DISPLAY DEVICE
DISPOSITIF D ÉCLAIRAGE ET D AFFICHAGE

(30) Priorität: 03.06.2008 DE 102008026517
(43) Veröffentlichungstag der Anmeldung: 09.02.2011
(73) Patentinhaber: Zumtobel Lighting GmbH, 6850 Dornbirn (AT)
(72) Erfinder: PETSCHULAT, Manfred, A-6922 Wolfurt (AT)
(74) Vertreter: Thun, Clemens
(86) Internationale Anmeldenummer: PCT/EP2009/003956
(87) Internationale Veröffentlichungsnummer: WO 2009/146893

(56) Entgegenhaltungen:
- EP-A- 1 551 178
- EP-A2- 1 379 917
- EP-A2- 1 396 781
- WO-A-01/17240
- WO-A-2004/112386
- WO-A-2006/059263
- WO-A-2007/072340
- WO-A-2007/131334
- WO-A1-2005/017739
- WO-A1-2007/113754
- WO-A2-2005/057921
- JP-A- H11 144 510
- US-A1- 2002 198 438
- US-A1- 2003 016 236
- US-A1- 2007 126 864
- US-A1- 2007 211 475
- US-B1- 6 611 297

## Beschreibung

Die Erfindung betrifft eine Beleuchtungs- und Anzeigevorrichtung, die ein Display mit einer ersten Lichtabgabefläche und ein Leuchtelement mit einer zweiten Lichtabgabefläche aufweist. Weiterhin betrifft die Erfindung eine Beleuchtungs- und Anzeigevorrichtung mit einem Projektor zur Projektion von Bildern und einem Leuchtelement mit einer Lichtabgabefläche.

Unter einer "Beleuchtungs- und Anzeigevorrichtung" wird im vorliegenden Rahmen eine Vorrichtung verstanden, die zum einen zur Beleuchtung dient und zum anderen zur Anzeige, insbesondere zur Anzeige von Informationen.

Unter einem "Leuchtelement" wird im vorliegenden Rahmen ein Mittel zur Beleuchtung, insbesondere zur Beleuchtung eines Raumes oder eines Raumbereichs verstanden. Ein Leuchtelement weist Mittel zur Lichterzeugung auf; weiterhin kann das Leuchtelement eine Lichtabgabefläche aufweisen, von der aus das erzeugte Licht an eine Umgebung des Leuchtelements abgegeben bzw. ausgestrahlt werden kann.

Unter einem "Display" wird im vorliegenden Rahmen eine Anzeigeeinheit eines elektronischen Geräts verstanden, beispielsweise eine Anzeigeeinheit eines Computers. Mit einem Display kann Licht erzeugt werden, das über eine Lichtabgabefläche des Displays abgestrahlt werden kann, und zwar derart, dass auf diese Weise auf der Lichtabgabefläche eine Anzeige sichtbar dargestellt werden kann. Zur Lichterzeugung kann das Display Licht emittierende Dioden (LEDs bzw. Leuchtdioden) aufweisen; auch eine Flüssigkristallanzeige kann vorgesehen sein.

Bei einem Leuchtelement ist in der Regel erwünscht, dass das Leuchtelement derart gestaltet ist, dass es sich vorteilhaft und raumsparend in einer mit dem Leuchtelement zu beleuchtenden Umgebung, also beispielsweise in einem zu beleuchtenden Raum oder Raumbereich, anordnen lässt. Außerdem soll selbstverständlich mit dem Leuchtelement so viel Licht zur Verfügung gestellt werden können, wie zur Beleuchtung erwünscht ist.

Aus der US 2007/0126864 A1 ist ein System bekannt, mit dem in einem ersten Bereich ein Video dargestellt werden kann und in einem zweiten Bereich, der um den ersten Bereich herum angeordnet ist, unterschiedliche Bilder, Muster oder dergleichen dargestellt werden können.

Aus der WO 2007/1313334 A1 ist ein Multi-Pixel-Display bekannt, das sich einerseits zur Darstellung von Grafik eignet, andererseits aber auch als Beleuchtungselement.

Aus der US 2002/0198438 A1 ist eine Überkopf-Anordnung mit einer Segeltuchabdeckung und einer Bildprojektionseinheit bekannt.

Aus der EP 1 396 781 A2 ist ein Anzeigesystem bekannt, das ein Display mit einer Lichtabgabefläche aufweist. Um die Lichtabgabefläche herum ist eine weitere Fläche gebildet, auf die ein Bild projiziert werden kann.

Aus der WO 2005/017739 A1 ist eine Vorrichtung mit einem Display bekannt, bei dem es sich beispielsweise um ein TV-Gerät handeln kann. Auf die, an das Display angrenzenden Wandbereiche des Raums werden Bilder projiziert.

Aus der WO 2007/113754 A1 ist ein Display bekannt, auf dessen beiden Seiten sich jeweils ein seitliches Display anschließt. Zur Bilderzeugung auf den seitlichen Displays dienen Projektoren.

Aus der EP 1379 917 A2 ist ein Projektor zur Projektion von Bildern auf einen Schirm bekannt. Aus der WO 2005/057921 A2 ist ebenfalls ein Projektor zur Projektion von Bildern auf einen Schirm bekannt.

Die US 6,611,297 B1 zeigt u.a. eine Beleuchtungsanordnung, bei der ein an einer Decke montierter Projektor einen unterhalb des Projektors befindlichen Wandbereich beleuchtet, wobei innerhalb des beleuchteten Wandbereichs ein Display zur Darstellung von Video-Informationen angeordnet ist.

Die JP H11 144510 A beschreibt ein Beleuchtungssystem, beim dem im Zentrum einer an der Decke eines Raums angeordneten Anordnung ein LCD-Display vorgesehen ist, welches von einer diffus lichtabgebenden Beleuchtungsanordnung umgeben ist.

Der vorliegenden Erfindung liegt die Aufgabe zu Grunde, eine verbesserte Beleuchtungs- und Anzeigevorrichtung anzugeben. Dabei sollen insbesondere bei insgesamt raumsparender Ausführung Möglichkeiten der Beleuchtung verbessert werden.

Diese Aufgabe wird gemäß der Erfindung mit den in den unabhängigen Ansprüchen genannten Gegenständen gelöst. Bevorzugte Ausführungsformen der Erfindung sind in den abhängigen Ansprüchen angegeben.

Gemäß der Erfindung ist eine Beleuchtungs- und Anzeigevorrichtung vorgesehen, die ein Display mit einer ersten Lichtabgabefläche und ein Leuchtelement mit einer zweiten Lichtabgabefläche aufweist. Die erste Lichtabgabefläche ist dabei kleiner als die zweite Lichtabgabefläche und mit Bezug auf die äußere Begrenzung der zweiten Lichtabgabefläche in einem mittleren Bereich angeordnet.

Falls mit der Vorrichtung eine Beleuchtung durchgeführt werden soll, kann hierfür Licht sowohl über Lichtabgabefläche des Leuchtelements, als auch über die Lichtabgabefläche des Displays ausgestrahlt werden. Durch die genannte Art der Anordnung lässt sich dabei die Lichtabgabefläche des Displays in die Lichtabgabefläche des Leuchtelements funktionell integrieren, so dass insgesamt eine in diesem Sinne vergrößerte Leichtabgabefläche zur Beleuchtung zur Verfügung steht. Auf diese Weise sind die Lichtabgabemöglichkeiten und damit die Beleuchtungsmöglichkeiten verbessert. Außerdem stellt in diesem Fall durch die integrative Anordnung das Display gleichsam einen Erweiterungsteil des Leuchtelements dar, so dass für das Display kein gesonderter Platz erforderlich ist. Daher ist die Vorrichtung insgesamt besonders raumsparend.

Sowohl das Display als auch das Leuchtelement sind dazu ausgelegt, auf der jeweiligen Lichtabgabefläche einzelne Bildpunkte darzustellen, wobei das Display dazu ausgelegt ist, mehr Bildpunkte pro Flächeneinheit darzustellen als das Leuchtelement.

Vorteilhaft weist das Display Lichtquellen in Form von LEDs oder eine Flüssigkristallanzeige auf.

Vorteilhaft weist das Leuchtelement Lichtquellen in Form von LEDs auf. Dabei kann weiterhin vorteilhaft vorgesehen sein, dass in Abstrahlrichtung vor den LEDs des Leuchtelements ein Material zur Akustikdämmung angeordnet ist. Auf diese Weise lässt sich die Beleuchtungs- und Anzeigevorrichtung besonders raumsparend zusätzlich zur Akustikdämmung verwenden.

Erfindungsgemäß ist das Display dazu ausgelegt, Licht in derselben oder in einer ähnlichen Farbe und/oder in derselben oder in einer ähnlichen Helligkeit abzugeben, wie das Leuchtelement. Wenn über beide Lichtabgabeflächen Licht abgegeben wird, kann auf diese Weise der Eindruck einer insgesamt besonders gleichmäßig leuchtenden Fläche bewirkt werden.

Vorteilhaft ist die kürzeste Entfernung zwischen der ersten Lichtabgabefläche und der zweiten Lichtabgabefläche vergleichsweise klein, zum Beispiel maximal so groß wie der halbe Durchmesser der ersten Lichtabgabefläche, vorzugsweise maximal so groß wie ein Zehntel des Durchmessers der ersten Lichtabgabefläche. Auch dies trägt bei Lichtabgabe über beide Lichtabgabeflächen zu einem Eindruck einer besonders einheitlich und gleichmäßig leuchtenden Fläche bei.

Vorteilhaft sind die erste Lichtabgabefläche und die zweite Lichtabgabefläche im Wesentlichen innerhalb einer Ebene angeordnet, vorzugsweise zwischen zwei parallelen Ebenen, deren Abstand so groß ist wie der halbe Durchmesser der ersten Lichtabgabefläche, vorzugsweise so groß wie ein Zehntel des Durchmessers der ersten Lichtabgabefläche. Durch eine derartige Anordnung lässt sich die Vorrichtung insbesondere besonders raumsparend in einem Raum, beispielsweise vor einer Wand des Raums, anordnen.

Vorteilhaft weist die Beleuchtungs- und Anzeigevorrichtung weiterhin eine Steuereinheit zur Ansteuerung des Displays und des Leuchtelements auf. Dies erleichtert die Bedienung insbesondere bei Einstellung einer Beleuchtung mittels beider Lichtabgabeflächen.

Gemäß einem weiteren Aspekt der Erfindung ist eine Kombination aus drei erfindungsgemäßen Beleuchtungs- und Anzeigevorrichtungen vorgesehen, wobei eine erste und eine zweite Beleuchtungs- und Anzeigevorrichtung eine Merkmalskombination gemäß dem zuerst genannten Aspekt der Erfindung aufweisen, also insbesondere jeweils ein Display und ein Leuchtelement aufweisen und wobei eine dritte Beleuchtungs- und Anzeigevorrichtung eine Merkmalskombination wie nachfolgend beschrieben aufweist, also insbesondere einen Projektor und ein Leuchtelement aufweist. Dabei weist die Lichtabgabefläche in einem mittleren Bereich eine Öffnung auf, wobei der Projektor relativ zu dem Leuchtelement so angeordnet ist, dass mit dem Projektor Bilder durch die Öffnung hindurch projiziert werden können.

Der Projektor kann nicht nur zur Projektion von Bildern verwendet werden, sondern auch zur Beleuchtung einer Arbeitsfläche bzw. einer Umgebung einer Arbeitsfläche. Beispielsweise kann vorgesehen sein, dass die Beleuchtungs- und Anzeigevorrichtung an einer Decke eines Raumes befestigt wird, so dass die Lichtabgabefläche parallel zur Decke ausgerichtet ist und mit dem Projektor auf eine Projektionsfläche unterhalb der Lichtabgabefläche projiziert werden kann. Als Projektionsfläche kann dabei eine Arbeitsfläche, beispielsweise eine Tischoberfläche dienen. Mit dem Projektor kann dann - je nach Bedarf - entweder auf der Projektionsfläche ein Bild, beispielsweise in Form einer Anzeige, erzeugt werden oder die Projektionsfläche kann mit einem gleichförmigen Licht bestrahlt werden, so dass eine Beleuchtungsfunktion erfüllt wird.

Vorteilhaft weist dabei das Leuchtelement Lichtquellen in Form von LEDs auf. Dabei kann weiterhin vorteilhaft vorgesehen sein, dass in Abstrahlrichtung vor den LEDs ein Material zur Akustikdämmung angeordnet ist.

Dabei kann vorteilhaft vorgesehen sein, dass die zweite Beleuchtungs- und Anzeigevorrichtung eine zusätzliche Leuchte zur Beleuchtung einer Arbeitsfläche aufweist, die an die zweite Lichtabgabefläche der zweiten Beleuchtungs- und Anzeigevorrichtung anschließt.

Die Erfindung wird im Folgenden an Hand von Ausführungsbeispielen und mit Bezug auf die Zeichnung näher erläutert. Es zeigt:

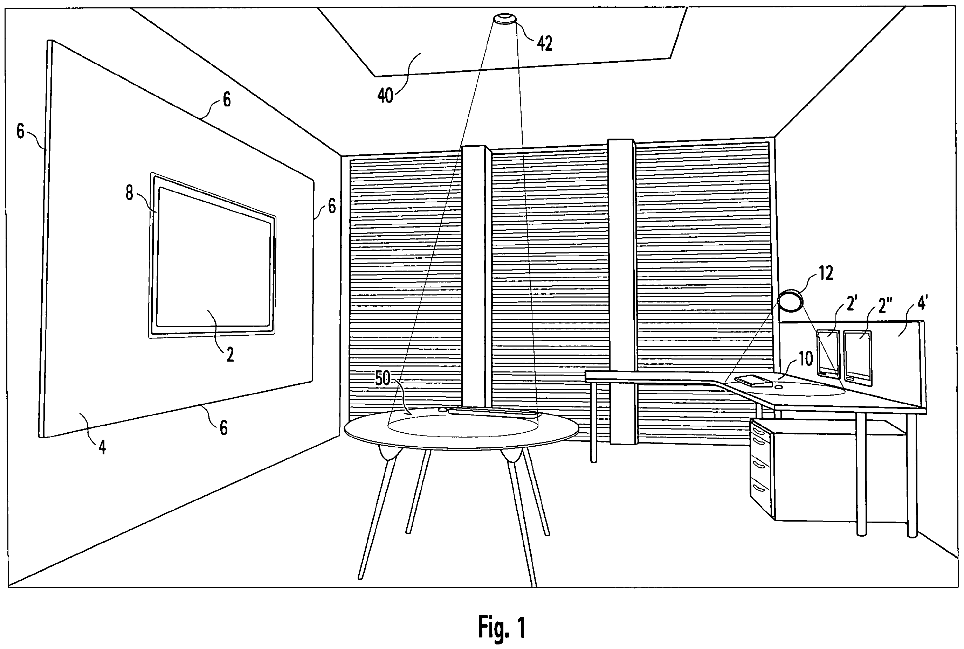

- Fig. 1: einen Arbeitsraum mit drei Ausführungsbeispielen einer erfindungsgemäßen Beleuchtungs- und Anzeigevorrichtung.

Fig. 1 zeigt beispielhaft einen Arbeitsraum in Form eines Büros mit insgesamt drei Ausführungsbeispielen von erfindungsgemäßen Beleuchtungs- und Anzeigevorrichtungen. Zu den heute typischen Haupttätigkeiten in einem Büro zählen beispielsweise konzentriertes Arbeiten, Telekommunikation, Durchführen von Videokonferenzen, Besprechungen usw. Dabei kommen üblicherweise moderne elektronische Medien, wie beispielsweise Computer mit Internetzugang usw. zum Einsatz, die im Allgemeinen immer vielseitiger und intuitiver in ihrer Bedienbarkeit werden. Vor diesem Hintergrund bietet die Erfindung eine besonders vorteilhafte Beleuchtungs- und Anzeigevorrichtungen (im Folgenden auch kurz "Vorrichtung" genannt), wobei die Einsatzmöglichkeit der Erfindung nicht auf das Umfeld eines Büros eingeschränkt ist. Beispielsweise kann eine erfindungsgemäße Beleuchtungs- und Anzeigevorrichtung auch in einem privaten Raumbereich, in einer Halle oder grundsätzlich auch im Freien eingesetzt werden.

Auf der linken Seite des in Fig. 1 gezeigten Raumes ist ein erstes Ausführungsbeispiel einer erfindungsgemäßen Vorrichtung dargestellt, das im Folgenden auch kurz als "Videokonferenzeinheit" bezeichnet wird. Die Vorrichtung umfasst ein Display, das an der betreffenden Wand des Raums angeordnet ist und das eine erste Lichtabgabefläche 2 bzw. "Lichtabgabefläche 2 des Displays" aufweist. Mit "Lichtabgabefläche" sei dabei eine Fläche bezeichnet, von der aus aktiv Licht ausgesendet werden kann.

Das Display dient zur Anzeige von Informationen. Es stellt also eine Anzeigevorrichtung dar und kann beispielsweise derart mit einem an sich bekannten, üblichen Computer verbunden sein, dass es dementsprechend als Display für diesen Computer dient. Als Interface zum Computer können hierbei an sich bekannte Mittel wie drahtlose Maus- oder Tastatureinheiten vorgesehen sein. Bei dem Display kann es sich beispielsweise um eine Anzeigevorrichtung auf Basis der Plasma-Technologie oder um ein LCD (Liquid Crystal Display) handeln. Die Bildschirmdiagonale des Displays kann beispielsweise zwischen 80 und 140 cm betragen.

Weiterhin erkennt man an der linken Wand des Raums ein Leuchtelement, zur Beleuchtung einer Umgebung der Vorrichtung, beispielsweise zur Beleuchtung des Raums. Das Leuchtelement weist eine zweite Lichtabgabefläche 4 bzw. eine "Lichtabgabefläche 4 des Leuchtelements" auf, die größer ist, als die erste Lichtabgabefläche 2. Dabei kann vorgesehen sein, dass das Leuchtelement dazu ausgelegt ist, ein diffuses Licht zu erzeugen. Als Lichtquelle kann eine Matrixanordnung von LEDs (Licht emittierenden Dioden) vorgesehen sein. Dabei können LEDs vorgesehen sein, die farbiges Licht erzeugen können, kurz "farbige" LEDs, also beispielsweise "RGB-LEDs" und/oder LEDs, die weißes Licht erzeugen können, kurz "weiße LEDs".

Die zweite Lichtabgabefläche 4 weist eine äußere Begrenzung 6 auf, die im gezeigten Beispiel rechteckförmig ist. Die gegenseitige Anordnung der beiden Lichtabgabeflächen 2, 4 ist derart, dass die erste Lichtabgabefläche 2 mit Bezug auf die äußere Begrenzung 6 der zweiten Lichtabgabefläche 4 in einem mittleren Bereich angeordnet ist. Beispielsweise kann - wie im gezeigten Beispiel der Fall - die erste Lichtabgabefläche 2 mit Bezug auf die äußere Begrenzung 6 der zweiten Lichtabgabefläche 4 im Zentrum bzw. "mittig" angeordnet sein.

Vorzugsweise ist vorgesehen, dass die Vorrichtung in zwei unterschiedlichen Modi betrieben werden kann, und zwar in einem "Beleuchtungsmodus" und in einem "Anzeigemodus". In dem Beleuchtungsmodus ist die Vorrichtung zumindest primär zur Beleuchtung einer Umgebung der Vorrichtung, also zum Beispiel zur Beleuchtung des Raums vorgesehen. Im "Anzeigemodus" ist die Vorrichtung zumindest primär zur Anzeige von Informationen mithilfe des Displays auf der ersten Lichtabgabefläche 2 vorgesehen.

Im Beleuchtungsmodus kann mit der Vorrichtung Licht zur Beleuchtung nicht nur über die Lichtabgabefläche 4 des Leuchtelements, sondern zusätzlich auch über die Lichtabgabefläche 2 des Displays ausgestrahlt werden. Durch die genannte Art der relativen Anordnung der beiden Lichtabgabeflächen 2, 4 ist die Lichtabgabefläche 2 des Displays gleichsam in die Lichtabgabefläche 4 des Leuchtelements integriert, so dass insgesamt eine quasi einheitlich erscheinende und in diesem Sinne vergrößerte Lichtabgabefläche zur Beleuchtung zur Verfügung steht. Auf diese Weise sind die Lichtabgabemöglichkeiten der Vorrichtung und damit die Beleuchtungsmöglichkeiten verbessert. Die Grenzen zwischen den beiden funktionellen Einheiten der Vorrichtung "Beleuchtung" einerseits und "Anzeige" andererseits sind bei der erfindungsgemäßen Vorrichtung sozusagen "verschwommen".

Außerdem wird dadurch erzielt, dass im Beleuchtungsmodus für das Display kein gesonderter Platz bzw. Raumbereich erforderlich ist, denn das Display ergänzt in diesem Modus das Leuchtelement, so dass im Beleuchtungsmodus das Leuchtelement und das Display eine funktionelle Einheit bilden; das Display ist also in diesem Fall insoweit in das Leuchtelement "eingebunden". Es bildet also im Beleuchtungsmodus in diesem Sinne einen "integrativen" Teil. Daher ist die Vorrichtung insgesamt besonders raumsparend.

Die zweite Lichtabgabefläche 4 kann - wie im gezeigten Beispiel der Fall - ringförmig, und zwar in Form eines geschlossenen Rings um die erste Lichtabgabefläche 2 herum angeordnet sein. Bei den typischen Größenverhältnissen in einem Raum kann auf diese Weise die Lichtabgabefläche 2 des Displays - mit Bezug auf einen in dem Raum sitzenden oder stehenden Menschen - etwa in Augenhöhe angeordnet sein, so dass sich auf der ersten Lichtabgabefläche 2 dargestellte Informationen im Allgemeinen leicht und gut erkennen lassen, während sich die Lichtabgabefläche 4 des Leuchtelements nach oben und unten deutlich über die Lichtabgabefläche des Displays hinaus erstreckt. Beispielsweise kann vorgesehen sein, dass sich die äußere Begrenzung 6 der zweiten Lichtabgabefläche 4 zwischen 30 cm und 100 cm oberhalb der oberen Begrenzung der ersten Lichtabgabefläche 2 befindet. Analoges kann auch für die unteren Begrenzungen und die beiden entsprechenden seitlichen Begrenzungen vorgesehen sein. Mit einer insgesamt vergleichsweise großen Lichtabgabefläche lässt sich ein vergleichsweise angenehmes Licht zur Beleuchtung erzeugen.

Im gezeigten Beispiel bedecken die beiden Lichtabgabeflächen 2, 4 einen überwiegenden Anteil der betreffenden Wand des Raums. Die Längen der Seiten der äußeren Begrenzung 6 der zweiten Lichtabgabefläche 4 können dabei im Bereich von Metern liegen, beispielsweise zwischen einem und fünf Metern.

Das Display kann vorteilhaft dazu ausgelegt sein, Licht in derselben oder in einer ähnlichen Farbe und/oder in derselben oder in einer ähnlichen Helligkeit bzw. Intensität abzugeben, wie das Leuchtelement. Beispielsweise kann vorgesehen sein, dass von beiden Lichtabgabeflächen 2, 4 "Weißlicht" derselben Helligkeit oder zumindest ähnlicher Helligkeit abgegeben werden kann. Auf diese Weise kann im Beleuchtungsmodus eine Beleuchtung erzielt werden, bei der die Lichtabgabe über die beiden Lichtabgabeflächen 2, 4 besonders homogen erscheint; insgesamt lässt sich auf diese Weise ein besonders gleichförmiges "Lichtbild" bewirken. Mit "ähnlicher" Farbe sei in diesem Zusammenhang eine Farbe bezeichnet, die sich in einem gleichabständigen Farbdiagramm innerhalb einer kleinen Umgebung von der betreffenden Farbe des Lichts des Leuchtelements befindet. Mit "ähnlicher" Helligkeit bzw. Intensität sei eine Helligkeit bezeichnet, die weniger als ein kleines Maß, beispielsweise weniger als 10% von der betreffenden Helligkeit bzw. Intensität des Lichts des Leuchtelements abweicht.

Vorteilhaft ist das Leuchtelement dazu ausgelegt, in unterschiedlichen Bereichen der zweiten Lichtabgabefläche Licht unterschiedlicher Farbe und/oder Helligkeit abzustrahlen. In diesem Fall kann im Anzeigemodus vorgesehen sein, dass das Leuchtelement so angesteuert werden kann, dass von der zweiten Lichtabgabefläche 4 derart Licht abgestrahlt wird, dass dadurch der Kontrast von der Anzeige auf der ersten Lichtabgabefläche 2 nach außen zu reduzierend verläuft. Es kann also insbesondere vorgesehen sein, dass auch im Anzeigemodus von der zweiten Lichtabgabefläche 4 zumindest innerhalb einer Umgebung der ersten Lichtabgabefläche 2 Licht abgestrahlt wird, wobei die Ansteuerung so vorgesehen sein kann, dass die Anzeige auf der ersten Lichtabgabefläche 2 hinsichtlich Helligkeit und/oder Farbe nach außen hin langsam abnehmend "weitergeführt" wird, und zwar unter der im Vergleich zum Display geringeren Auflösung bzw. Bildpunktdichte des Leuchtelements.

Mit Bezug auf ein besonders einheitliches Lichtbild ist es auch vorteilhaft, wenn zwischen den beiden Lichtabgabeflächen 2, 3 kein oder nur ein vergleichsweise kleiner Abstand besteht. Dabei kann beispielsweise vorteilhaft vorgesehen sein, dass die kürzeste Entfernung zwischen der ersten Lichtabgabefläche 2 und der zweiten Lichtabgabefläche 4 maximal so groß ist wie der halbe Durchmesser der ersten Lichtabgabefläche 2, vorzugsweise maximal so groß wie ein Zehntel des Durchmessers der ersten Lichtabgabefläche 2. Im gezeigten Beispiel beträgt dieser Abstand weniger als ein Zehntel des Durchmessers der ersten Lichtabgabefläche 2 und ist im Wesentlichen nur von einem schmalen Rahmen 8 ausgefüllt, der Teil des Displays sein kann und der die erste Lichtabgabefläche 2 einfasst. Beispielsweise kann vorgesehen sein, dass die Bildschirmdiagonale der Lichtabgabefläche 2 des Displays 110 cm beträgt; in diesem Fall ist also der Durchmesser der ersten Lichtabgabefläche 110 cm und ein Zehntel hiervon 11 cm, so dass der Zwischenraum zwischen den beiden Lichtabgabeflächen 2, 4 in diesem Fall eine Breite aufweisen würde, die an jeder Stelle kleiner als 11 cm ist.

Vorteilhaft kann die Vorrichtung weiterhin eine (in der Figur nicht dargestellte) Kamera aufweisen, die zusammen mit dem Display so mit einem Computer verbunden ist, dass mit deren Hilfe eine Videokonferenz durchgeführt werden kann. Die Kamera kann dabei beispielsweise im Bereich des Rahmens 8 angeordnet sein, beispielsweise in den Rahmen 8 eingelassen sein.

Da das Display zur Anzeige dient, also beispielsweise zur Anzeige von Informationen, wie sie bei einer Arbeit mit einem Computer typischerweise an einem Display angezeigt werden, ist für das Display eine entsprechend hohe Auflösung bzw. Bildpunktdichte vorgesehen. Insbesondere kann vorgesehen sein, dass das Display dafür ausgelegt ist, mehr Bildpunkte pro Flächeneinheit darstellen bzw. auflösen zu können, als das Leuchtelement, denn eine Anzeige von Informationen ist über die zweite Lichtabgabefläche 4 nicht vorgesehen.

Da die Vorrichtung insgesamt mit Bezug auf einen Raum großflächig gestaltet sein kann, eignet sie sich auch besonders dafür, vor einer Wand angeordnet zu werden, so wie im gezeigten Beispiel vor der linken Wand der Fall. Aus diesem Grund kann es auch besonders vorteilhaft sein, vor der Lichtquelle der zweiten Lichtabgabefläche 4, also beispielsweise vor den entsprechenden LEDs ein Material anzuordnen, das für Licht durchlässig ist, aber mit Bezug auf Akustik bzw. Schall dämpfend wirkt. Auf diese Weise kann die Vorrichtung auch eine Akustikdämmung bewirken. Beispielsweise kann hierfür ein Akustikpanel aus transparentem Wabenmaterial vorgesehen sein.

Besonders raumsparend lässt sich die Vorrichtung gestalten, wenn die beiden Lichtabgabeflächen 2, 4 im Wesentlichen in einer Ebene angeordnet sind und dabei die Gesamterstreckung der Vorrichtung senkrecht zu dieser Ebene, also deren "Stärke" oder "Dicke" vergleichsweise klein ist. Beispielsweise kann vorgesehen sein, dass die erste Lichtabgabefläche 2 und die zweite Lichtabgabefläche 4 zwischen zwei parallelen Ebenen angeordnet sind, deren Abstand so groß ist wie der halbe Durchmesser der ersten Lichtabgabefläche 2, vorzugsweise so groß wie ein Zehntel des Durchmessers der ersten Lichtabgabefläche 2. Es kann selbstverständlich auch vorgesehen sein, dass die beiden Lichtabgabeflächen 2, 4 in einer Ebene angeordnet sind. Dies fördert weiterhin im Beleuchtungsmodus ein besonders einheitliches Erscheinungsbild der beiden Lichtabgabeflächen.

Beim dargestellten Ausführungsbeispiel ist weiterhin eine (in der Figur nicht gezeigte) Steuereinheit zur Ansteuerung des Displays und des Leuchtelements vorgesehen. Mit der Steuereinheit kann also sowohl das Display, als auch das Leuchtelement angesteuert werden. Die Steuereinheit ist vorzugsweise dazu ausgelegt, die beiden genannten Modi, also den Beleuchtungsmodus und den Anzeigemodus ein- bzw. auszuschalten. Vorzugsweise kann dabei vorgesehen sein, dass mit der Steuereinheit im Beleuchtungsmodus das von der ersten Lichtabgabefläche 2 abgegebene Licht hinsichtlich seiner Helligkeit und Farbe auf das Licht abgestimmt werden kann, das von der zweiten Lichtabgabefläche 4 abgestrahlt wird, und zwar vorzugsweise derart, dass sich das Licht, das von der ersten Lichtabgabefläche 2 abgegeben wird, möglichst wenig von dem Licht unterscheidet, das von der zweiten Lichtabgabefläche 4 abgegeben wird. Dies erleichtert die Bedienung der Vorrichtung bei Einstellung des Beleuchtungsmodus.

In Fig. 1 ist auf der rechten Seite ein zweites Ausführungsbeispiel einer erfindungsgemäßen Beleuchtungs- und Anzeigevorrichtung dargestellt, die im Folgenden auch kurz als "Bürotischeinheit" bezeichnet wird. Im Folgenden wird nur auf Unterschiede zum ersten Ausführungsbeispiel eingegangen. Soweit nicht anders angegeben, gelten die Ausführungen zum ersten Ausführungsbeispiel analog bzw. sinngemäß.

Beim zweiten Ausführungsbeispiel setzt sich die erste Lichtabgabefläche aus mehreren, im gezeigten Beispiel aus zwei getrennten Segmenten 2' und 2" zusammen. Dabei können die beiden Segmente 2', 2" jeweils für sich Displays darstellen, die mit einem Computer oder jeweils mit einem Computer verbunden sind. Die zweite Lichtabgabefläche 4' ist in diesem Fall überwiegend rechts und links von den beiden Segmenten 2', 2" der ersten Lichtabgabefläche angeordnet. Die beiden Segmente 2', 2" können bei dieser Ausführung sozusagen in die zweite Lichtabgabefläche 4' "eingelassen" sein. Insgesamt bilden die beiden Lichtabgabeflächen 2', 2" und 4' eine "Lichtwand".

Im gezeigten Beispiel sind die beiden Lichtabgabeflächen 2', 2" und 4' im Wesentlichen vertikal angeordnet, und zwar an einer rückwärtigen Begrenzung einer horizontalen Arbeitsfläche 10, bei der es sich beispielsweise um eine Bürotischoberfläche handeln kann.

Zur weitergehenden Verbesserung der Beleuchtungssituation der Arbeitsfläche 10 kann in diesem Fall eine zusätzliche Leuchte 12 vorgesehen sein, mit der die Arbeitsfläche 10 von oben beleuchtet werden kann, so dass also eine "Akzentbeleuchtung" erzeugt werden kann. Beispielsweise kann hierfür eine Leuchte auf Spiegel-Werfer Basis vorgesehen sein. Dabei kann der Spiegel an dem Leuchtelement, beispielsweise im Bereich der oberen Begrenzung der zweiten Lichtabgabefläche 4 bzw. der "Lichtwand" befestigt sein. Besonders vorteilhaft kann in diesem Fall weiterhin vorgesehen sein, dass der Spiegel schwenkbar ist und dabei von einem Motor bewegt werden kann. Dabei kann weiterhin am Spiegel eine Kamera befestigt sein, mit der ein Bild der Arbeitsfläche 10 erfasst werden kann, so dass auf dieser Basis eine aktive Nachführung des Spiegels mithilfe des Motors ermöglicht ist. Außerdem kann eine automatische Fokussierung der Projektionsfläche bzw. Arbeitsfläche vorgesehen sein.

Im Anzeigemodus kann vorgesehen sein, dass das Licht, das von der zweiten Lichtabgabefläche 4' abgestrahlt wird, in Intensität und Farbe so gewählt ist, dass eine Kontrastminderung zwischen der ersten Lichtabgabefläche bzw. den beiden Segmenten 2', 2" der ersten Lichtabgabefläche und dem Hintergrundlicht erzielt wird.

An der Decke des in Fig. 1 gezeigten Raums ist ein weiteres Beispiel einer Beleuchtungs- und Anzeigevorrichtung zu erkennen, das im Folgenden auch kurz als "Deckeneinheit" bezeichnet wird. Diese weist einen (in der Figur als solchen nicht sichtbaren) Projektor zur Projektion von Bildern auf, sowie ein Leuchtelement mit einer Lichtabgabefläche 40. Bei dem Projektor kann es sich beispielsweise um ein üblicherweise als "Videobeamer" bezeichnetes Gerät handeln. Die Lichtabgabefläche 40 ist dabei parallel zur Decke, also im Wesentlichen horizontal ausgerichtet. Der Projektor ist so angeordnet, dass mit ihm nach unten projiziert werden kann.

Soweit nicht anders angegeben gelten die Ausführungen zum ersten Ausführungsbeispiel wiederum sinngemäß auch für dieses dritte Ausführungsbeispiel. Insbesondere ist wiederum vorgesehen, dass die Vorrichtung sowohl in einem "Beleuchtungsmodus", als auch in einem "Anzeigemodus" betrieben werden kann.

Die Lichtabgabefläche 40 entspricht der Lichtabgabefläche 4 des Leuchtelements beim ersten Ausführungsbeispiel; die Lichtabgabefläche 40 kann also, soweit nicht anders dargestellt, dieselben Merkmale aufweisen wie die zweite Lichtabgabefläche 4 beim ersten Ausführungsbeispiel. Es kann also insbesondere wiederum vorgesehen sein, dass als Lichtquellen LEDs vorgesehen sind und in Abstrahlrichtung vor diesen LEDs eine lichtdurchlässige Akustikdämmung angeordnet ist.

In einem mittleren Bereich, beispielsweise genau in der Mitte, weist dabei die Lichtabgabefläche 40 eine Öffnung 42 auf. Dabei ist der Projektor relativ zu dem Leuchtelement so angeordnet, dass mit dem Projektor Bilder durch die Öffnung 42 hindurch nach unten projiziert werden können. Beispielsweise kann vorgesehen sein, dass der Projektor eine Optik umfasst, die im Bereich der Öffnung 42 oder in der Öffnung 42 angeordnet ist. Es kann vorgesehen sein, dass der Projektor sozusagen in das Leuchtelement bzw. in die Lichtabgabefläche 40 des Leuchtelements "eingelassen" ist.

Im gezeigten Beispiel ist unterhalb der Vorrichtung ein Tisch mit einer Tischoberfläche 50 angeordnet, so dass die Tischoberfläche 50 als Projektionsfläche für den Projektor dient.

Der Projektor ist dazu ausgelegt, im Anzeigemodus ein Bild zu projizieren, das einer Anzeige entspricht, wie sie beim ersten Ausführungsbeispiel auf der Lichtabgabefläche 2 des Displays dargestellt werden kann. Der Projektor kann also dementsprechend mit einem Computer verbunden sein. Als Interface zum Computer können hierbei wiederum an sich bekannte Mittel wie drahtlose Maus- bzw. Tastatureinheiten vorgesehen sein.

Weiterhin ist der Projektor dazu ausgelegt, im Beleuchtungsmodus ein gleichförmiges Licht abzugeben, so dass die entsprechende Projektionsfläche, hier also die Tischoberfläche 50 oder ein Teilbereich der Tischoberfläche 50 gleichförmig beleuchtet wird. Der Projektor kann in diesem Sinn also im Beleuchtungsmodus die Funktion eines Strahlers übernehmen. Beispielsweise kann hierfür eine farbneutrale weiße Beleuchtung vorgesehen sein. Hierbei ist wiederum eine entsprechende Nachführung des Lichtkegels möglich, wie sie weiter oben für die zusätzliche Leuchte 12 bei der Bürotischeinheit dargestellt worden ist.

Besonders vorteilhaft ist hier die Doppelfunktion des Projektors, der im Anzeigemodus als Anzeigemittel dient und im Beleuchtungsmodus als Beleuchtungsmittel.

Die in Fig. 1 gezeigte Kombination von drei erfindungsgemäßen Beleuchtungs- und Anzeigevorrichtungen eignet sich in besonderem Maße für einen Einsatz in einem Büro-Umfeld.

Mit der zuerst genannten Vorrichtung, der "Videokonferenzeinheit" können Videokonferenzen durchgeführt werden. Für ein konzentriertes Arbeiten und Telekommunikation eignet sich die "Bürotischeinheit" und für eine Besprechung die "Deckeneinheit". Auf diese Weise eignet sich die dargestellte Kombination besonders für wesentliche, typische Haupttätigkeiten im Arbeitsumfeld eines Büros. Selbstverständlich ist auch eine Kombination von zwei erfindungsgemäßen Beleuchtungs- und Anzeigevorrichtungen vorteilhaft. Beispielsweise kann die "Videokonferenzeinheit" mit der "Bürotischeinheit" kombiniert werden und entsprechendes gilt für die weiteren möglichen Unterkombinationen.

Bei Kombination von mehreren erfindungsgemäßen Beleuchtungs- und Anzeigevorrichtungen kann vorteilhaft ein gemeinsamer Computer, vorzugsweise mit USB-Anbindung, also sozusagen ein "Office-PC" vorgesehen sein, der entsprechend mit allen Vorrichtungen verbunden sein kann. Über diesen Computer kann dann gegebenenfalls auch die Nachführung des Spiegel-Werfers erfolgen.

## Patentansprüche

1. Beleuchtungs- und Anzeigevorrichtung, die dazu ausgelegt ist, in zwei unterschiedlichen Modi betrieben zu werden, und zwar in einem Anzeigemodus und in einem Beleuchtungsmodus,
aufweisend
- ein Display mit einer ersten Lichtabgabefläche (2), und
- ein Leuchtelement mit einer zweiten Lichtabgabefläche (4),
wobei mit Lichtabgabefläche eine Fläche bezeichnet sei, von der aus aktiv Licht ausgesendet werden kann,
wobei die erste Lichtabgabefläche (2) kleiner ist als die zweite Lichtabgabefläche (4) und dabei mit Bezug auf die äußere Begrenzung (6) der zweiten Lichtabgabefläche (4) in einem mittleren Bereich angeordnet ist und wobei sowohl das Display als auch das Leuchtelement dazu ausgelegt sind, auf der jeweiligen Lichtabgabefläche (2, 4) einzelne Bildpunkte darzustellen, wobei das Display dazu ausgelegt ist, mehr Bildpunkte pro Flächeneinheit darzustellen als das Leuchtelement,
wobei die Beleuchtungs- und Anzeigevorrichtung im Anzeigemodus zumindest primär zur Anzeige von Informationen mithilfe des Displays auf der ersten Lichtabgabefläche (2) vorgesehen ist und im Beleuchtungsmodus zumindest primär zur Beleuchtung einer Umgebung der Beleuchtungs- und Anzeigevorrichtung,
wobei im Beleuchtungsmodus Licht zur Beleuchtung nicht nur über die Lichtabgabefläche (4) des Leuchtelements, sondern zusätzlich auch über die Lichtabgabefläche (2) des Displays ausgestrahlt wird,
wobei das Display dazu ausgelegt ist, Licht in derselben oder in einer ähnlichen Farbe und/oder in derselben oder in einer ähnlichen Helligkeit abzugeben, wie das Leuchtelement, so dass im Beleuchtungsmodus eine Beleuchtung erzielt wird, bei der die Lichtabgabe über die beiden Lichtabgabeflächen (2, 4) besonders homogen erscheint.

2. Beleuchtungs- und Anzeigevorrichtung nach Anspruch 1,
bei der das Display Lichtquellen in Form von LEDs oder eine Flüssigkristallanzeige aufweist.

3. Beleuchtungs- und Anzeigevorrichtung nach einem der vorhergehenden Ansprüche,
bei der das Leuchtelement Lichtquellen in Form von LEDs aufweist.

4. Beleuchtungs- und Anzeigevorrichtung nach Anspruch 3,
bei der in Abstrahlrichtung vor den LEDs des Leuchtelements ein Material zur Akustikdämmung angeordnet ist.

5. Beleuchtungs- und Anzeigevorrichtung nach einem der vorhergehenden Ansprüche,
bei der die kürzeste Entfernung zwischen der ersten Lichtabgabefläche (2) und der zweiten Lichtabgabefläche (4) maximal so groß ist wie der halbe Durchmesser der ersten Lichtabgabefläche (2), vorzugsweise maximal so groß wie ein Zehntel des Durchmessers der ersten Lichtabgabefläche (2).

6. Beleuchtungs- und Anzeigevorrichtung nach einem der vorhergehenden Ansprüche,
bei der die erste Lichtabgabefläche (2) und die zweite Lichtabgabefläche (4) im Wesentlichen innerhalb einer Ebene angeordnet sind, vorzugsweise zwischen zwei parallelen Ebenen, deren Abstand so groß ist wie der halbe Durchmesser der ersten Lichtabgabefläche (2), vorzugsweise so groß wie ein Zehntel des Durchmessers der ersten Lichtabgabefläche (2).

7. Beleuchtungs- und Anzeigevorrichtung nach einem der vorhergehenden Ansprüche,
weiterhin aufweisend eine Steuereinheit zur Ansteuerung des Displays und des Leuchtelements.

8. Kombination aus drei Beleuchtungs- und Anzeigevorrichtungen,
wobei eine erste Beleuchtungs- und Anzeigevorrichtung die in einem der Ansprüche 1 bis 7 genannte Merkmalskombination aufweist,
wobei eine zweite Beleuchtungs- und Anzeigevorrichtung die in einem der Ansprüche 1 bis 7 genannte Merkmalskombination aufweist, und
wobei eine dritte Beleuchtungs- und Anzeigevorrichtung aufweist:
- einen Projektor zur Projektion von Bildern, und
- ein Leuchtelement mit einer Lichtabgabefläche (40),
wobei die Lichtabgabefläche (40) in einem mittleren Bereich eine Öffnung (42) aufweist, und der Projektor relativ zu dem Leuchtelement so angeordnet ist, dass mit dem Projektor Bilder durch die Öffnung (42) hindurch projiziert werden können.

9. Kombination nach Anspruch 8,
bei der das Leuchtelement Lichtquellen in Form von LEDs aufweist.

10. Kombination nach Anspruch 8 oder 9,
bei der in Abstrahlrichtung vor den LEDs ein Material zur Akustikdämmung angeordnet ist.

11. Kombination nach einem der Ansprüche 8 bis 10,
wobei die zweite Beleuchtungs- und Anzeigevorrichtung eine zusätzliche Leuchte zur Beleuchtung einer an die zweite Lichtabgabefläche (4') der zweiten Beleuchtungs- und Anzeigevorrichtung anschließende und vorzugsweise zu dieser im Wesentlichen rechtwinklig angeordneten Arbeitsfläche (10) aufweist.

## Claims

1. A lighting- and display device, which is designed to be operated in two different modes, specifically in a display mode and in a lighting mode,
having
- a display with a first light emission surface (2), and
- a lighting element with a second light emission surface (4),
wherein a surface is designated as a light emission surface, from which light can be actively emitted,
wherein the first light emission surface (2) is smaller than the second light emission surface (4) and is thereby arranged in a center region with respect to the outer border (6) of the second light emission surface (4) and
wherein both the display as well as the lighting element are designed to display individual image points on the respective light emission surface (2, 4),
wherein the display is designed to display more image points per surface unit than the lighting element,
wherein the lighting- and display device is provided in the display mode at least primarily for displaying information by means of the display on the first light emission surface (2) and is provided in the lighting mode at least primarily for lighting an environment of the lighting- and display device,
wherein in the lighting mode light for the lighting is emitted not only via the light emission surface (4) of the lighting element, but rather in addition also via the light emission surface (2) of the display,
wherein the display is designed to emit light in the same or in a similar color and/or in the same or in a similar brightness, as the lighting element, so that in the lighting mode a lighting is achieved, in which the light emission via the two light emission surfaces (2, 4) appears particularly homogeneous.

2. The lighting- and display device according to Claim 1,
in which the display has light sources in the form of LEDs or a liquid crystal display.

3. The lighting- and display device according to any one of the preceding claims, in which the lighting element has light sources in the form of LEDs.

4. The lighting- and display device according to Claim 3,
in which a material for acoustic insulation is arranged in the emission direction in front of the LEDs of the lighting element.

5. The lighting- and display device according to any one of the preceding claims,
in which the shortest distance between the first light emission surface (2) and the second light emission surface (4) is maximally as large as half the diameter of the first light emission surface (2), preferably maximally as large as a tenth of the diameter of the first light emission surface (2).

6. The lighting- and display device according to any one of the preceding claims,
in which the first light emission surface (2) and the second light emission surface (4) are arranged substantially within a plane, preferably between two parallel planes, the distance of which is as large as half the diameter of the first light emission surface (2), preferably as large as a tenth of the diameter of the first light emission surface (2).

7. The lighting- and display device according to any one of the preceding claims,
furthermore, having a control unit for controlling the display and the lighting element.

8. A combination of three lighting- and display devices,
wherein a first lighting- and display device has the combination of features mentioned in any one of Claims 1 to 7,
wherein a second lighting- and display device has the combination of features mentioned in any one of Claims 1 to 7, and
wherein a third lighting- and display device has:
- a projector for the projection of images, and
- a lighting element with a light emission surface (40),
wherein the light emission surface (40) has an opening (42) in a center region, and the projector is arranged relative to the lighting element such that images can be projected through the opening (42) with the projector.

9. The combination according to Claim 8,
in which the lighting element has light sources in the form of LEDs.

10. The combination according to Claim 8 or 9,
in which a material for acoustic insulation is arranged in the emission direction in front of the LEDs.

11. The combination according to any one of Claims 8 to 10,
wherein the second lighting- and display device has an additional luminaire for lighting a working surface (10) adjoining the second light emission surface (4') of the second lighting- and display device and arranged preferably substantially at right angles to the latter.

## Revendications

1. Dispositif d'éclairage et d'affichage, qui est conçu pour fonctionner dans deux modes différents, à savoir dans un mode d'affichage et dans un mode d'éclairage,
comportant
- un écran avec une première surface d'émission lumineuse (2), et
- un élément lumineux avec une deuxième surface d'émission lumineuse (4),
la surface d'émission lumineuse désignant une surface à partir de laquelle de la lumière peut être émise activement,
la première surface d'émission lumineuse (2) étant plus petite que la deuxième surface d'émission lumineuse (4) et étant en l'occurrence, par rapport à la délimitation (6) extérieure de la deuxième surface d'émission lumineuse (4), disposée dans une zone centrale, et en l'occurrence l'écran ainsi que le l'élément lumineux étant conçus pour représenter des pixels individuels sur la surface d'émission lumineuse (2, 4) respective, l'écran étant conçu pour représenter plus de pixels par unité de surface que l'élément lumineux,
le dispositif d'éclairage et d'affichage étant, dans le mode d'affichage, prévu au moins en premier lieu pour l'affichage d'informations à l'aide de l'écran sur la première surface d'émission lumineuse (2) et, dans le mode d'éclairage, au moins en premier lieu pour l'éclairage d'un environnement du dispositif d'éclairage et d'affichage,
de la lumière étant, dans le mode d'éclairage, émise non seulement par le biais de la surface d'émission lumineuse (4) de l'élément lumineux, mais en plus également par le biais de la surface d'émission lumineuse (2) de l'écran,
l'écran étant conçu pour émettre de la lumière dans la même couleur que, ou dans une couleur semblable à, et/ou dans la même luminosité que, ou dans une luminosité semblable à l'élément lumineux de sorte que, dans le mode d'éclairage, il est obtenu un éclairage avec lequel l'émission de lumière par le biais des deux surfaces d'émission lumineuse (2, 4) apparaît particulièrement homogène.

2. Dispositif d'éclairage et d'affichage selon la revendication 1,
dans lequel l'écran comporte des sources de lumière sous la forme de LED ou un affichage à cristaux liquides.

3. Dispositif d'éclairage et d'affichage selon l'une des revendications précédentes,
dans lequel l'élément lumineux comporte des sources de lumière sous la forme de LED.

4. Dispositif d'éclairage et d'affichage selon la revendication 3,
dans lequel un matériau destiné à l'isolation acoustique est disposé devant les LED de l'élément lumineux dans la direction de rayonnement.

5. Dispositif d'éclairage et d'affichage selon l'une des revendications précédentes,
dans lequel la distance la plus courte entre la première surface d'émission lumineuse (2) et la deuxième surface d'émission lumineuse (4) est au maximum égale au demi-diamètre de la première surface d'émission lumineuse (2), de préférence au maximum égale à un dixième du diamètre de la première surface d'émission lumineuse (2).

6. Dispositif d'éclairage et d'affichage selon l'une des revendications précédentes,
dans lequel la première surface d'émission lumineuse (2) et la deuxième surface d'émission lumineuse (4) sont disposées essentiellement à l'intérieur d'un plan, de préférence entre deux plans parallèles, dont l'intervalle est égal au demi-diamètre de la première surface d'émission lumineuse (2), de préférence égal à un dixième du diamètre de la première surface d'émission lumineuse (2).

7. Dispositif d'éclairage et d'affichage selon l'une des revendications précédentes,
comportant en outre une unité de commande destinée au pilotage de l'écran et de l'élément lumineux.

8. Combinaison de trois dispositifs d'éclairage et d'affichage, un premier dispositif d'éclairage et d'affichage présentant la combinaison de caractéristiques citée dans l'une des revendications 1 à 7, un deuxième dispositif d'éclairage et d'affichage présentant la combinaison de caractéristiques citée dans l'une des revendications 1 à 7, et un troisième dispositif d'éclairage et d'affichage comportant :
- un projecteur destiné à la projection d'images, et
- un élément lumineux avec une surface d'émission lumineuse (40),
la surface d'émission lumineuse (40) comportant dans une zone centrale une ouverture (42), et le projecteur étant disposé relativement à l'élément lumineux de telle sorte que des images peuvent être projetées avec le projecteur à travers l'ouverture (42).

9. Combinaison selon la revendication 8,
dans laquelle l'élément lumineux comporte des sources de lumière sous la forme de LED.

10. Combinaison selon la revendication 8 ou 9,
dans laquelle un matériau destiné à l'isolation acoustique est disposé devant les LED dans la direction de rayonnement.

11. Combinaison selon l'une des revendications 8 à 10,
dans laquelle le deuxième dispositif d'éclairage et d'affichage comporte une lampe supplémentaire destinée à l'éclairage d'une surface de travail (10) adjacente à la deuxième surface d'émission de lumineuse (4') du deuxième dispositif d'éclairage et d'affichage, et de préférence disposée essentiellement à angle droit par rapport à celui-ci.
